# EUROPÄISCHE PATENTSCHRIFT

(11) **EP 2 809 481 B1**
(45) Veröffentlichungstag und Bekanntmachung des Hinweises auf die Patenterteilung: **22.02.2017**
(21) Anmeldenummer: 13706166.9
(22) Anmeldetag: 18.01.2013
(51) Int. Cl.: B24D 13/10, B24D 13/14, B24D 18/00, B29C 47/00

(54) **ABRASIVBORSTE, VERFAHREN ZU IHRER HERSTELLUNG, BÜRSTE MIT ABRASIVBORSTEN UND VERFAHREN ZUR OBERFLÄCHENBEARBEITUNG EINES WERKSTÜCKS MIT EINER ABRASIVBORSTEN AUFWEISENDEN BÜRSTE**
ABRASIVE BRISTLE, METHOD FOR PRODUCING SAME, BRUSH HAVING ABRASIVE BRISTLES AND METHOD FOR PROCESSING THE SURFACE OF A WORKPIECE BY WAY OF A BRUSH HAVING ABRASIVE BRISTLES
SOIES ABRASIVES, PROCÉDÉ DE FABRICATION DESDITES SOIES ABRASIVES, BROSSE MUNIE DE SOIES ABRASIVES ET PROCÉDÉ DE TRAITEMENT DE SURFACE D'UNE PIÈCE AU MOYEN D'UNE BROSSE PRÉSENTANT DES SOIES ABRASIVES

(30) Priorität: 30.01.2012 DE 102012001623; 09.05.2012 DE 102012009087
(43) Veröffentlichungstag der Anmeldung: 10.12.2014
(73) Patentinhaber: Hahl Filaments GmbH, 89597 Munderkingen (DE)
(72) Erfinder: IDZKO, Jürgen, 86399 Bobingen (DE); BAUR, Dieter, 89584 Ehingen (DE); KENZELMANN, Stefan, 89584 Ehingen (DE); MEID, Holger, 89347 Bubesheim (DE); MUCKENFUSS, Günter, 72764 Reutlingen (DE)
(74) Vertreter: Lichti - Patentanwälte Partnerschaft mbB
(86) Internationale Anmeldenummer: PCT/EP2013/000140
(87) Internationale Veröffentlichungsnummer: WO 2013/113472

(56) Entgegenhaltungen:
- EP-A2- 1 524 078
- WO-A1-95/23539
- US-A- 5 318 603

## Beschreibung

Die Erfindung betrifft ein Verfahren zur Herstellung einer Abrasivborste, wobei ein Kunststoff-Material aufgeschmolzen und in die Schmelze ein Granulat aus Abrasivteilchen eingemischt wird und wobei die Schmelze mit den Abrasivteilchen zu einem Filament extrudiert und das Filament nachträglich bearbeitet und zerschnitten wird. Ferner betrifft die Erfindung eine entsprechende Abrasivborste.

Desweiteren betrifft die Erfindung eine Bürste mit Abrasivborsten und ein Verfahren zur Oberflächenbehandlung eines Werkstücks mit einer Bürste, die Abrasivborsten aufweist oder aus diesen besteht.

Abrasivborsten der genannten Art sind in der WO 95/23539 A1
beschrieben und finden üblicherweise dort Verwendung, wo eine Oberfläche eines Werkstücks bearbeitet und insbesondere abgetragen oder poliert werden muss.

Die Abrasivborsten werden üblicherweise hergestellt, indem ein Kunststoff-Material beispielsweise aus Polyamid 6.12 in einem Extruder aufgeschmolzen wird. In die Kunststoff-Schmelze werden granulatartige Abrasivteilchen eingemischt und die Schmelze wird zusammen mit den Abrasivteilchen durch eine Düse extrudiert und in Form eines sogenannten endlosen Filamentes weiteren Bearbeitungsstationen zugeführt, in denen das Filament verstreckt und/oder erwärmt und/oder geschrumpft werden kann. Zur Herstellung der einzelnen Borsten wird das Filament dann auf eine gewünschte Länge geschnitten.

Es hat sich gezeigt, dass derartige Abrasivborsten nur für eine relativ kurze Einsatzzeit ihre abtragende Bearbeitungsfunktion wahrnehmen können. Wenn die Borsten über das zu bearbeitende Werkstück beispielsweise in Form einer rotierenden Bürste gezogen werden, entstehen hohe Kräfte und Temperaturen, die die Gebrauchsfähigkeit der einzelnen Borste herabsetzen.

Auch in der US 5 318 603 ist als bevorzugtes Kunststoff-Material Nylon und vorzugsweise Nylon 6/12 angegeben, womit die vorgenannten Probleme verbunden sind.

Gemäß der EP 1 524 078 A2 ist vorzugsweise ein zweischichtiger Aufbau der Borsten mit einem Kern und einem Überzug vorgesehen. Das Material des Überzugs ist für die Gebrauchseigenschaften der Borste das entscheidende Material, da es mit den zu bearbeitenden Oberflächen in Kontakt kommt. Dabei ist als Material für den Überzug beispielsweise ebenfalls Nylon vorgesehen, womit die oben genannten Probleme verbunden sind.

Der Erfindung liegt die Aufgabe zugrunde, eine Abrasivborste, die eine lange Gebrauchsdauer aufweist, und ein Verfahren zur Herstellung einer entsprechenden Abrasivborste zu schaffen. Ferner sollen eine Bürste mit Abrasivborsten und ein Verfahren zur Oberflächenbearbeitung eines Werkstücks geschaffen werden, mit denen sich das Werkstück schnell und kostengünstig bearbeiten lässt.

Diese Aufgabe wird erfindungsgemäß durch ein Verfahren mit den Merkmalen des Anspruchs 1 gelöst. Dabei ist vorgesehen, dass das Kunststoff-Material ein hoch-temperaturbeständiges Polymer aus der Gruppe der Polyetheretherketone (PEEK) und partiell aromatischen Polyamiden einschließlich von Mischungen oder Blends von partiell aromatischen Polyamiden mit einer Dauergebrauchstemperatur von ≥ 150°C ist und dass die Schmelze mit den Abrasivteilchen bei einer Temperatur von ≥ 280°C extrudiert wird.

Die Dauergebrauchstemperatur stellt die Temperaturgrenze dar, oberhalb der eine wesentliche Herabsetzung der Festigkeitseigenschaften des Kunststoffmaterials durch technische Belastung stattfindet. Die Dauergebrauchstemperatur (auch als Relativer Temperatur Index bezeichnet, RTI) ist die höchste Temperatur, bei der das Material nach einer festgelegten Zeitspanne von üblicherweise 20000h noch mindestens 50% seiner Eigenschaften (Zug- bzw. Streck-festigkeit) aufweist (s. auch International Standard IEC 60216-1).

Die Erfindung geht von der Grundüberlegung aus, dass die Probleme bei den bisherigen Abrasivborsten dadurch bestimmt waren, dass bei Verwendung der Abrasivborsten zwischen den Abrasivborsten und dem Werkstück eine relativ große Reibung auftritt, die zu hohen Temperaturen führt, die die Stabilität der Abrasivborsten herabsetzt. Dies wird erfindungsgemäß umgangen, indem das Kunststoff-Material, d.h. die Matrix der Abrasivborste aus einem hoch-temperaturbeständigen Polymer besteht. Die Borsten können aus der Gruppe der Polyetheretherketone (PEEK) und partiell aromatischen Polyamiden wie Polyphthalamiden [PPA] (wie z.B. unter anderem PA 3T, PA 6T oder PA 9T etc.) oder auch aus Mischungen oder Blends von aromatischen Polyamiden bestehen.

Die erfindungsgemäßen Filamente können rund oder n-eckig mit n≥3 sowie in Bändchenform vorliegen.

Um eine gute Einbettung der Abrasivteilchen in das Kunststoff-Material zu erreichen, wird die Schmelze mit den Abrasivteilchen bei einer Temperatur von ≥ 280°C extrudiert. In bevorzugter Ausgestaltung der Erfindung ist vorgesehen, dass die Schmelze mit den Abrasivteilchen bei einer Temperatur von 300°C bis 400°C extrudiert wird.

In Weiterbildung der Erfindung ist vorgesehen, dass das Kunststoff-Material teilkristallin ist. Dies ermöglicht es, das mit der Extrusion hergestellte Filament nachträglich so zu verstrecken, dass das Filament nicht reißt oder in sonstiger Weise beschädigt wird.

Als Abrasivteilchen können beispielsweise Teilchen aus SiC und/oder aus Al₂O₃ verwendet werden. Es ist jedoch auch möglich, Diamantsplitter oder -teilchen und/oder Korund-Teilchen und/oder Keramik-Teilchen und/oder Borcarbid-Teilchen als Abrasivteilchen vorzusehen.

Um die Haftung zwischen dem Kunststoff-Material und den Abrasivteilchen zu verbessern, können diese vor dem Einmischen in die Kunststoff-Schmelze mit einem Haftungs-mittel beschichtet sein. Aus der Literatur ist in diesem Zusammenhang eine Beschichtung mit beispielsweise Silanen bekannt.

Die Abrasivteilchen können in das angeschmolzene Kunststoff-Material eingebracht und zusammen mit diesem auf die Extrusionstemperatur von ≥ 280°C gebracht werden. Alternativ ist es jedoch auch möglich, zunächst das Kunststoff-Material auf eine Temperatur von ≥ 280°C zu bringen und dadurch aufzuschmelzen und dann erst die Abrasivteilchen in die Schmelze einzumischen.

Hinsichtlich der Abrasivborste wird die oben genannte Aufgabe durch eine Abrasivborste mit den Merkmalen des Anspruchs 7 gelöst. Dabei ist vorgesehen, dass das Kunststoff-Material ein hoch-temperaturbeständiges Kunststoff-Material aus der Gruppe der Polyetheretherketone (PEEK) und partiell aromatischen Polyamiden einschleißlich von Mischungen oder Blends von partiell aromatischen Polyamiden mit einer Dauergebrauchstemperatur ≥ 150°C ist.

Weitere Merkmale der erfindungsgemäßen Abrasivborste sowie die sich damit gegebenen Vorteile sind bereits im Zusammenhang mit dem erfindungsgemäßen Verfahren erwähnt, worauf zwecks Vermeidung von Wiederholungen verwiesen wird.

Die erfindungsgemäßen Abrasivborsten finden zur Oberflächenbehandlung eines Werkstückes insbesondere bei einer Bürste Verwendung, die einen Borstenträger aufweist, der einen Borstenbesatz trägt, wobei der Borstenbesatz Abrasivborsten gemäß einem der Ansprüche 7 bis 10 oder nach dem Verfahren gemäß einem der Ansprüche 1 bis 6 hergestellte Abrasivborsten aufweist. Vorzugsweise besteht der Borstenbesatz vollständig aus entsprechenden Abrasivborsten.

Mit einer entsprechenden Bürste lässt sich ein oberflächiger Materialabtrag des Werkstücks und somit dessen schnelle Bearbeitung erreichen, ohne dass die Gefahr besteht, dass die bei der Bearbeitung auftretenden Kräfte und insbesondere Temperaturen zu einer Beeinträchtigung der Funktionalität der Abrasivborsten und damit der Bürste führen.

Gemäß einem erfindungsgemäßen Verfahren zur Oberflächenbehandlung eines Werkstücks mittels einer Bürste, die Abrasivborsten gemäß einem der Ansprüche 7 bis 10 oder nach dem Verfahren gemäß einem der Ansprüche 1 bis 6 herge-stellte Abrasivborsen aufweist, wird die Bürste rotiert und mit der zu bearbeitenden Oberfläche in Anlage gebracht. Die Bürste besitzt dabei eine Drehzahl von 3000 l/min bis 12000 l/min und insbesondere eine Drehzahl von 5000 l/min bis 9000 l/min. Diese sehr hohen Rotationsgeschwindigkeiten der Bürste führen zu dem sehr hohen Materialabtrag und der schnellen Bearbeitung des Werkstücks. Die dabei auf-tretenden relativ hohen Temperaturen können von den erfindungsgemäßen Abrasivborsten ohne Beeinträchtigung der Wirkungsweise ausgehalten werden.

Vorzugsweise wird die Größe der Bürste und insbesondere die Länge der Borsten so ausgelegt, dass die Borstenenden mit einer Umfangsgeschwindigkeit von 5000 m/min bis 7000 m/min bewegt werden.

Besonders effektiv ist das Verfahren, wenn der Borstenbesatz der bei dem Verfahren zum Einsatz kommenden Bürste vollständig aus Abrasivborsten gemäß einem der Ansprüche 7 bis 10 oder aus Abrasivborsten besteht, die nach dem Verfahren gemäß einem der Ansprüche 1 bis 6 hergestellt sind.

## Patentansprüche

1. Verfahren zur Herstellung einer Abrasivborste, wobei ein Kunststoff-Material aufgeschmolzen und in die Schmelze ein Granulat aus Abrasivteilchen eingemischt wird und wobei die Schmelze mit den Abrasivteilchen zu einem Filament extrudiert und das Filament nachträglich bearbeitet und zerschnitten wird, **dadurch gekennzeichnet, dass** das Kunststoff-Material ein hoch-temperaturbeständiges Polymer aus der Gruppe der Polyetheretherketone (PEEK) und partiell aromatischen Polyamiden einschließlich von Mischungen oder Blends von partiell aromatischen Polyamiden mit einer Dauergebrauchstemperatur ≥ 150°C ist und dass die Schmelze mit den Abrasivteilchen bei einer Temperatur von ≥ 280°C extrudiert wird.

2. Verfahren nach Anspruch 1, **dadurch gekennzeichnet, dass** die Schmelze mit den Abrasivteilchen bei einer Temperatur von 300°C bis 400°C extrudiert wird.

3. Verfahren nach Anspruch 1 oder 2, **dadurch gekennzeichnet, dass** das Kunststoff-Material teilkristallin ist.

4. Verfahren nach einem der Ansprüche 1 bis 3, **dadurch gekennzeichnet, dass** die Abrasivteilchen aus SiC und/oder Al₂O₃ bestehen und/oder von Diamantteilchen und/oder Korund-Teilchen und/oder Keramik-Teilchen und/oder Borcarbid-Teilchen und/oder Zirkonoxid gebildet sind.

5. Verfahren nach einem der Ansprüche 1 bis 4, **dadurch gekennzeichnet, dass** die Abrasivteilchen mit einem Haftungsmittel beschichtet sind.

6. Verfahren nach einem der Ansprüche 1 bis 5, **dadurch gekennzeichnet, dass** die Abrasivteilchen bei einer Temperatur von ≥ 280°C in die Schmelze eingemischt werden.

7. Abrasivborste aus einem Kunststoff-Material, in das Abrasivteilchen eingemischt sind, **dadurch gekennzeichnet, dass** das Kunststoff-Material ein hochtemperatur-beständiges Material aus der Gruppe der Polyetheretherketone (PEEK) und partiell aromatischen Polyamiden einschließlich von Mischungen oder Blends von partiell aromatischen Polyamiden mit einer Dauergebrauchstemperatur ≥ 150°C ist.

8. Abrasivborste nach Anspruch 7, **dadurch gekennzeichnet, dass** das Kunststoff-Material teilkristallin ist.

9. Abrasivborste nach Anspruch 7 oder 8, **dadurch gekennzeichnet, dass** die Abrasivteilchen aus SiC und/oder Al₂O₃ bestehen und/oder von Diamantteilchen und/oder Korund-Teilchen und/oder Keramik-Teilchen und/oder Borcaribid-Teilchen und/oder Zirkonoxid gebildet sind.

10. Abrasivborste nach einem der Ansprüche 7 bis 9, **dadurch gekennzeichnet, dass** die Abrasivteilchen mit einem Haftungsmittel beschichtet sind.

11. Bürste zur Oberflächenbehandlung eines Werkstücks, mit einem Borstenträger, der einen Borstenbesatz trägt, wobei der Borstenbesatz Abrasivborsten gemäß einem der Ansprüche 7 bis 10 oder nach dem Verfahren gemäß einem der Ansprüche 1 bis 6 hergestellte Abrasivborsten aufweist.

12. Bürste nach Anspruch 11, **dadurch gekennzeichnet, dass** der Borstenbesatz vollständig aus Abrasivborsten gemäß einem der Ansprüche 7 bis 10 oder nach dem Verfahren gemäß einem der Ansprüche 1 bis 6 hergestellten Abrasivborsten besteht.

13. Verfahren zur Oberflächenbehandlung eines Werkstücks mittels einer Bürste, die Abrasivborsten gemäß einem der Ansprüche 7 bis 10 oder nach dem Verfahren gemäß einem der Ansprüche 1 bis 6 hergestellte Abrasivborsten aufweist, wobei die Bürste rotiert und mit der zu bearbeitenden Oberfläche in Anlage gebracht wird und wobei die Bürste mit einer Drehzahl von 3000 l/min bis 12000 l/min rotiert wird.

14. Verfahren nach Anspruch 13, **dadurch gekennzeichnet, dass** die Bürste mit einer Drehzahl im Bereich von 5000 l/min bis 9000 l/min rotiert wird.

15. Verfahren nach Anspruch 13 oder 14, **dadurch gekennzeichnet, dass** die Borstenenden mit einer Umfangsgeschwindigkeit von 5000 m/min bis 7000 m/min bewegt werden.

16. Verfahren nach einem der Ansprüche 13 bis 15, **dadurch gekennzeichnet, dass** der Borstenbesatz der Bürste vollständig aus Abrasivborsten gemäß einem der An-sprüche 7 bis 10 oder aus Abrasivborsten besteht, die nach dem Verfahren gemäß einem der Ansprüche 1 bis 6 hergestellt sind.

## Claims

1. Method for the manufacture of an abrasive bristle, wherein a plastic material is melted and a granular material made of abrasive particles is mixed into the melt, and wherein the melt with the abrasive particles is extruded into a filament, and the filament is subsequently treated and cut up, **characterized in that** the plastic material is a high-temperature-resistant polymer being selected from the group comprising polyetheretherketones (PEEK) and partially aromatic polyamides including mixtures or blends of partially aromatic polyamides, with a continued use temperature of ≥ 150°C, and **in that** the melt with the abrasive particles is extruded at a temperature of ≥ 280°C.

2. Method in accordance with claim 1, **characterized in that** the melt with the abrasive particles is extruded at a temperature of 300°C to 400°C.

3. Method in accordance with claim 1 or 2 **characterized in that** the plastic material is partially crystalline.

4. Method in accordance with one of the claims 1 through 3, **characterized in that** the abrasive particles consist of SiC and/or Al₂O₃: and/or are formed by diamond particles and/or corundum particles and/or ceramic particles and/or boron carbide particles and/or zirconium oxide.

5. Method in accordance with one of the claims 1 through 4, **characterized in that** the abrasive particles are coated with an adhesive.

6. Method in accordance with one of the claims 1 through 5, **characterized in that** abrasive particles are mixed into the melt at a temperature of ≥ 280°C.

7. Abrasive bristle made of a plastic material, into which abrasive particles are mixed, **characterized in that** the plastic material is a high-temperature-resistant material being selected from the group comprising polyetheretherketones (PEEK) and partially aromatic polyamides including mixtures or blends of partially aromatic polyamides, with a continued use temperature of ≥ 150°C.

8. Abrasive bristle in accordance with claim 7 **characterized in that** the plastic material is partially crystalline.

9. Abrasive bristle in accordance with claim 7 or 8, **characterized in that** the abrasive particles consist of SiC and/or Al₂O³ and/or are formed by diamond particles and/or corundum particles and/or ceramic particles and/or boron carbide particles and/or zirconium oxide.

10. Abrasive bristle in accordance with one of the claims 7 through 9, **characterized in that** the abrasive particles are coated with an adhesive.

11. Brush for the surface treatment of a workpiece, with a bristle carrier, which carries a bristle filling, whereby the bristle filling has abrasive bristles in accordance with one of the claims 7 through 10 or abrasive bristles manufactured according to the method in accordance with one of the cl-aims 1 through 6.

12. Brush in accordance with claim 11, **characterized in that** the bristle filling consists entirely of abrasive bristles in accordance with one of the claims 7 through 10 or abrasive bristles manufactured according to the method in accordance with one of the claims 1 through 6.

13. Method for the surface treatment of a workpiece by means of a brush, which has abrasive bristles in accordance with one of the claims 7 through 10 or abrasive bristles manufactured according to the method in accordance with one of the claims 1 through 6, wherein the brush is rotated and is brought into contact with the surface to be treated, and wherein the brush is rotated with a speed of 3000 l/min to 12000 l/min.

14. Method in accordance with claim 13, **characterized in that** the brush is rotated with a speed in the range Of 5000 l/min to 9000 l/min.

15. Method in accordance with claim 13 or 14, **characterized in that** the bristle ends are moved with a peripheral speed of 5000 m/min to 7000 m/min.

16. Method in accordance with one of the claims 13 through 15, **characterized in that** the bristle filling of the brush consists entirely of abrasive bristles in accordance with of the claims 7 through 10 or abrasive bristles which are manufactured according to the method in accordance with one of the claims 1 through 6.

## Revendications

1. Procédé de fabrication d'une soie abrasive, une matière plastique étant fondue et un granulat de particules abrasives étant ajouté dans la masse en fusion et la masse en fusion étant extrudée avec les particules abrasives pour former un filament et le filament étant traité et découpé ultérieurement, **caractérisé en ce que** la matière plastique est un polymère résistant aux hautes températures du groupe des polyétheréthercétones (PEEK) et des polyamides partiellement aromatiques y compris des mélanges ou amalgames de polyamides partiellement aromatiques avec une température permanente d'utilisation ≥ 150 °C et que la masse en fusion est extrudée avec les particules abrasives à une température ≥ 280 °C.

2. Procédé selon la revendication 1, **caractérisé en ce que** la masse en fusion est extrudée avec les particules abrasives à une température de 300 °C à 400 °C.

3. Procédé selon la revendication 1 ou 2, **caractérisé en ce que** la matière plastique est partiellement cristalline.

4. Procédé selon l'une quelconque des revendications 1 à 3, **caractérisé en ce que** les particules abrasives sont en SiC et/ou Al₂O₃ et/ou sont formées de particules de diamant et/ou de particules de corindon et/ou de particules de céramique et/ou de particules de carbure de bore et/ou d'oxyde de zirconium.

5. Procédé selon l'une quelconque des revendications 1 à 4, **caractérisé en ce que** les particules abrasives sont revêtues d'un moyen d'adhérence.

6. Procédé selon l'une quelconque des revendications 1 à 5, **caractérisé en ce que** les particules abrasives sont ajoutées dans la masse en fusion à une température ≥ 280 °C.

7. Soie abrasive composée d'une matière plastique dans laquelle des particules abrasives sont ajoutées, **caractérisée en ce que** la matière plastique est une matière résistante aux hautes températures appartenant au groupe des polyétheréthercétones (PEEK) et des polyamides partiellement aromatiques incluant des mélanges ou amalgames de polyamides partiellement aromatiques avec une température permanente d'utilisation > 150 °C.

8. Soie abrasive selon la revendication 7, **caractérisée en ce que** la matière plastique est partiellement cristalline.

9. Soie abrasive selon la revendication 7 ou 8, **caractérisée en ce que** les particules abrasives sont en SiC et/ou Al₂O₃ et/ou sont formées de particules de diamant et/ou de particules de corindon et/ou de particules de céramique et/ou de particules de carbure de bore et/ou d'oxyde de zirconium.

10. Soie abrasive selon l'une quelconque des revendications 7 à 9, **caractérisée en ce que** les particules abrasives sont revêtues d'un moyen d'adhérence.

11. Brosse pour le traitement de surface d'une pièce, avec un support de soies comportant une garniture de soies, la garniture de soies comportant des soies abrasives selon l'une quelconque des revendications 7 à 10 ou des soies abrasives fabriquées selon le procédé selon l'une quelconque des revendications 1 à 6.

12. Brosse selon la revendication 11, **caractérisée en ce que** la garniture de soies se compose entièrement de soies abrasives selon l'une quelconque des revendications 7 à 10 ou de soies abrasives fabriquées selon le procédé selon l'une quelconque des revendications 1 à 6.

13. Procédé de traitement de surface d'une pièce au moyen d'une brosse comportant des soies abrasives selon l'une quelconque des revendications 7 à 10 ou des soies abrasives fabriquées selon le procédé selon l'une quelconque des revendications 1 à 6, la brosse tournant et la surface à traiter étant amenée à son contact et la brosse tournant à une vitesse de rotation allant de 3000 tr/min à 12 000 tr/min.

14. Procédé selon la revendication 13, **caractérisé en ce que** la brosse tourne à une vitesse de rotation comprise dans la plage allant de 5000 tr/min à 9000 tr/min.

15. Procédé selon la revendication 13 ou 14, **caractérisé en ce que** les extrémités des soies sont déplacées à une vitesse périphérique allant de 5000 tr/min à 7000 tr/min.

16. Procédé selon l'une quelconque des revendications 13 à 15, **caractérisé en ce que** la garniture de soies de la brosse est entièrement composée de soies abrasives selon l'une quelconque des revendications 7 à 10 ou de soies abrasives fabriquées selon le procédé selon l'une quelconque des revendications 1 à 6.
